# EUROPÄISCHE PATENTSCHRIFT

(11) **EP 3 168 544 B1**
(45) Veröffentlichungstag und Bekanntmachung des Hinweises auf die Patenterteilung: **02.05.2018**
(21) Anmeldenummer: 15194266.1
(22) Anmeldetag: 12.11.2015
(51) Int. Cl.: F24F 12/00, F04D 29/54, F04D 29/66

(54) **BELÜFTUNGSVORRICHTUNG**
VENTILATION DEVICE
DISPOSITIF D'AÉRATION

(43) Veröffentlichungstag der Anmeldung: 17.05.2017
(73) Patentinhaber: InVENTer GmbH, 07751 Löberschütz (DE)
(72) Erfinder: Heewig, André, 07778 Dornburg-Camburg (DE); Fietze, Martin, 07743 Jena (DE); Otto, Frieder, 07613 Heideland/Königshofen (DE); Schindler, Torsten, 07778 Lehesten/Altengönna (DE)
(74) Vertreter: Patentanwälte Geyer, Fehners & Partner mbB

(56) Entgegenhaltungen:
- DE-C2- 4 104 423

## Beschreibung

### Gebiet der Erfindung

Die Erfindung betrifft eine Belüftungsvorrichtung zum Be- und Entlüften eines Raumes. Eine solche Belüftungsvorrichtung umfasst einen Luftkanal zur Verbindung einer Innenseite des Raumes mit einer Außenseite, d.h. einer äußeren Umgebung außerhalb des Gebäudes, in welchem sich der betreffende Raum befindet. In dem Luftkanal ist ein Axialventilator angeordnet, der in mindestens zwei Betriebszuständen mit entgegengesetzten Luftförderrichtungen zur Förderung von Zuluft von der Außenseite zur Innenseite des Raumes und zur Förderung von Abluft von der Innenseite des Raumes zur Außenseite betreibbar ist. Schließlich umfasst die Belüftungsvorrichtung auch einen in dem Luftkanal zwischen dem Axialventilator und der Außenseite angeordneten Wärmespeicher. Solche Belüftungsvorrichtungen werden beispielsweise im modernen Wohnungsbau für die Belüftung von Räumen oder Zimmern von Ein- oder Mehrfamilienhäusern eingesetzt. Es handelt sich dabei um dezentral angeordnete Belüftungsvorrichtungen, die nur einzelne Räume belüften und daher recht kompakt gebaut werden können. Die Durchmesser der Belüftungsvorrichtungen, die für solche Zwecke verwendet werden, liegen üblicherweise im Bereich zwischen etwa 8 cm und 30 cm und werden im Rahmen von Energiesparmaßnahmen zur effizienten Belüftung bzw. Frischluftzufuhr eingesetzt, beispielsweise in Passivhäusern.

### Stand der Technik

Im Stand der Technik sind solche Systeme seit Längerem bekannt. Aufgrund der Verwendung von Axialventilatoren, bestehend in der Regel aus Statorgehäuse, Nabe und Laufrad, werden die in direkter Nachbarschaft dazu angeordneten Wärmetauscher nur ungleichmäßig durchströmt, im zentralen Bereich um die Rotationsachse des Ventilators ist die Durchströmungsgeschwindigkeit geringer, es findet hier nur ein verminderter Luftaustausch statt, die Effizienz des Geräts wird verringert. Dies ist eine Folge des radialen Dralls der Luft nach außen, verursacht durch die Schaufeln des Ventilators. Um diesen radialen Drall auszugleichen, benötigt die strömende Luft eine Strecke einer gewissen Mindestlänge, die jedoch aufgrund der kompakten Bauform, die für den Einbau in Außenwände von beispielsweise Ein- oder Mehrfamilienhäusern zwingend notwendig ist, nicht zur Verfügung steht.

Um die Effizienz der Belüftungsvorrichtung zu verbessern, gibt es im Stand der Technik verschiedene Ansätze. So wird beispielsweise in der DE 41 04 423 C2 eine Entlüftungs- und Belüftungsanlage beschrieben, welche mit einem Wärmespeicher zur Rückgewinnung der Wärme aus der Abluft beheizter Räume ausgestattet ist. Die DE 41 04 423 C2 offenbart damit eine Belüftungsvorrichtung zum Be- und Entlüften eines Raumes gemäß dem Oberbegriff von Anspruch 1. Zur Erhöhung der Effizienz werden dabei mehrere Wärmespeicher seriell hintereinander geschaltet, zwischen zwei Wärmespeichern befindet sich jeweils ein Luftabstand, der das Ableiten von Wärme unterbinden soll. Ein Ventilator mit umkehrbarer Drehrichtung sorgt dafür, dass abwechselnd Ab- und Frischluft zwischen den Speicherelementen strömen. Die Verwendung mehrerer Wärmespeicher scheidet jedoch in der Regel aufgrund der notwendigen Länge, die für die Hintereinanderreihung mehrerer Wärmetauscher notwendig ist, aus, da diese den Abstand zwischen Innen- und Außenseite für gewöhnlich überschreitet.

In der DE 20 2014 003 368 U1 wird ein Lüftungsgerät zur Innenraumbelüftung in Gebäuden beschrieben, welches über zwei getrennte Luftwege verfügt, wobei in jedem der Luftwege ein Ventilator angeordnet ist. Die Drehachse der Ventilatoren ist jeweils schräg zu einer Längsausrichtung der Kanäle angeordnet, um den Luftstrom vor dem Eintritt in den Wärmetauscher zusätzlich zu verwirbeln, so dass der Wärmetauscher gleichmäßiger angeströmt werden kann, als dies bei axial entlang der Längsrichtung ausgerichteten Ventilatoren der Fall wäre. Dieser Aufbau ist komplex und daher kostenintensiver als der Einbau eines Lüfters, dessen Drehachse parallel zur Längsausrichtung der Kanäle liegt. Zudem ist die Anordnung nicht wartungsfreundlich, da die Lüfter schwer zugänglich sind und besondere Befestigungsmittel benötigen.

Andererseits ist es in der Strömungstechnik bekannt, zur Gleichrichtung des Luftstromes, d.h. zur Beseitigung des radialen Dralls, Leitwerke zu verwenden. Ein Beispiel dafür ist in der DE 10 2012 109 542 A1 beschrieben. Dort ist ein Axiallüfter beschrieben, dem ein Strömungsgleichrichter in Strömungsrichtung nachgeordnet ist. Der Strömungsgleichrichter weist eine Vielzahl von radial angeordneten Luftleitschaufeln auf, welche zur Achsrichtung gekrümmt verlaufen, in axialer Richtung also eine Krümmung aufweisen. Die Anordnung ist für einen großen Volumenstrom ausgerichtet und weist zu diesem Zweck mehrere Kränze mit Luftleitschaufeln auf. Eine Vorrichtung mit nur einem solchen Kranz ist beispielsweise in der DE 44 04 262 A1 beschrieben.

In der DE 20 2004 017 333 U1 wird eine Vorrichtung zur Stallentlüftung, d.h. ebenfalls für einen großen Volumenstrom, beschrieben. Zur Umwandlung der Drallströmung in eine Meridianströmung ist dem Laufrad eines Axialventilators ein Nachleitrad in Strömungsrichtung nachgeordnet, welches eine Vielzahl von Leitschaufeln aufweist, die kranzförmig um die Drehachse des Axialventilators angeordnet sind und, in Strömungsrichtung gesehen, zur Axialrichtung hin gekrümmt sind.

Auch dieses Leitwerk ist zur Korrektur der Strömungsrichtung abgeführter Luft angepasst. Für einen Reversierbetrieb sind solche Nachleitwerke jedoch nicht geeignet, da sie nur das Strömungsverhalten vom Ventilator wegströmender Luft optimieren, sich ihre Konstruktion auf einem Luftstrom hin zum Ventilator jedoch negativ auswirkt, da sie diesen in axialer Richtung bremsen würde. Bei den im Stand der Technik bekannten Lösungen kann dies jedoch außer Betracht bleiben, da diese ausschließlich für die Entlüftung, d.h. für den Transport von Abluft nach außen, ausgelegt sind.

### Beschreibung der Erfindung

Aufgabe der Erfindung ist es daher, eine Lüftungsvorrichtung der eingangs beschriebenen Art, bei welcher der Lüfter im Reversierbetrieb operierbar ist, dahingehend zu verbessern, dass die Kapazität des Wärmespeichers beim Transport von Abluft nach außen effizienter gelöst wird, ohne dass dabei nachteilige Auswirkungen auf den Betriebszustand, in welchem Zuluft von außen nach innen geführt wird, in Kauf genommen werden müssen.

Diese Aufgabe wird bei einer Belüftungsvorrichtung der eingangs beschriebenen Art dadurch gelöst, dass zwischen dem Axialventilator und dem Wärmespeicher ein erstes Leitwerk zum Ausgleich des radialen Dralls aus dem Raum strömender Luft angeordnet ist, wobei im ersten Leitwerk eine Anzahl radial von einer, mit einer Rotationsachse des Axialventilators zusammenfallenden Symmetrieachse abstehenden Lamellen angeordnet ist und wobei die Lamellen zwei Großseiten, die von Längs- und Querkanten eingefasst werden, aufweisen, und die Längskanten fluchtend entlang der Rotationsachse ausgerichtet sind.

In anderen Worten bedeutet dies, dass die Längskanten jeweils einer Lamelle entlang der axialen Richtung blickend aufeinander liegen, d.h. die Lamellen sind in Bezug auf die axiale Richtung nicht schräg angestellt. Über die Querkanten ist in der Regel jede Lamelle mit einer stabilisierenden Halterung oder Aufnahme verbunden, diese kann aus einem inneren Zylinder mit sehr geringem Umfang, welcher bevorzugt hohl ist, und aus einem äußeren Hohlzylinder bestehen. Innerer und äußerer Zylinder sind dann über die Lamellen miteinander verbunden. Die Verbindung der Lamellen mit den Halterungselementen kann über die gesamten Querkanten erfolgen, sie kann aber auch auf einen Bereich der Querkanten beschränkt sein, so dass diese Kanten - ebenso wie die Längskanten - nicht notwendigerweise gerade verlaufen müssen, sondern, sollte dies aus strömungstechnischen Gründen vorteilhaft sein, beispielsweise Aussparungen oder Wölbungen, welche sich auf einen Teil der Kante oder über die gesamte Kante erstrecken können, aufweisen.

Indem die Längskanten der Lamellen fluchtend in Bezug auf die Rotationsachse bzw. Symmetrieachse ausgerichtet sind, lässt sich das erste Leitwerk sowohl als Vor- als auch als Nachleitwerk verwenden, da es auf Luft, welche dem Axialventilator zuströmt, keine negativen Auswirkungen in dem Sinne, dass ein die Axialgeschwindigkeit herabsetzender Drall erzeugt würde, wie dies bei den im Stand der Technik mit Ventilatoren verwendeten Leitwerken der Fall ist.

Darüber hinaus haben Versuche gezeigt, dass für Luftströme in der Größenordnung, wie sie bei Wohnräumen in der Regel auftreten, selbst bei einer fluchtenden Anordnung der Längskanten der Lamellen der radiale Drall der aus dem Ventilator strömenden Luft in der Funktion eines Nachleitwerks soweit verringert wird, dass ein nachgeordneter Wärmetauscher in Bezug auf seinen Querschnitt gleichmäßig durchströmt wird. Insbesondere wird auch der zentrale Bereich des Wärmetauschers, welcher beispielsweise als Keramikkörper mit vielen axial verlaufenden Kanälen ausgestaltet sein kann, ebenso gut durchströmt werden, wie die Randbereiche, wohingegen die Durchströmungsgeschwindigkeit in diesem Bereich im Stand der Technik ohne Leitwerk stark abnimmt.

Die Großseiten der Lamellen sind bevorzugt als Planflächen ausgestaltet, dies ist die einfachste Form, welche sich auch werkzeugtechnisch beispielsweise bei einer Herstellung im Spritzgussverfahren mit dem geringsten technischen Aufwand realisieren lässt. Um das Strömungsverhalten weiter zu optimieren, kann es jedoch vorteilhaft sein, die Großseiten der Lamellen auch mit einer - in Bezug auf einen Querschnitt der Lamelle in axialer Richtung - symmetrischen oder asymmetrischen, konvexen oder konkaven Wölbung oder einem anderen Querschnittsprofil auszugestalten, was jedoch herstellungstechnisch in der Regel aufwendiger ist. Wichtig ist dabei, dass die Längskanten der Lamellen in axialer Richtung fluchtend ausgestaltet sind, was einen wesentlichen Anteil daran hat, dass ein mit solchen Lamellen ausgestattetes Leitwerk als Nachleitwerk effektiv den radialen Drall verringert bzw. nahezu eliminiert.

In einer besonders bevorzugten Ausgestaltung ist zwischen dem Axialventilator und der Innenseite des Raumes ein zweites Leitwerk angeordnet. Mit diesem kann insbesondere der Druckaufbau und der Luftvolumenstrom von in den Raum strömender Luft erhöht werden, da das zweite Leitwerk hier als Nachleitwerk arbeitet, d.h. den radialen Drall aus der einströmenden Luft reduziert und die radialen Geschwindigkeitskomponenten zum größten Teil in axiale Geschwindigkeitskomponenten umgewandelt werden. Den gleichen Effekt bewirkt auch das erste Leitwerk für aus dem Raum strömende Luft, dieser ist dort jedoch nicht wesentlich.

Die fluchtende Anordnung der Längskanten der Lamellen und optional die plane Ausgestaltung ihrer Großflächen erweist sich insbesondere im Reversierbetrieb als vorteilhaft, da dann das jeweils als Vorleitwerk arbeitende, d.h. das in Strömungsrichtung vor dem Ventilator liegende, zuerst durchlaufene Leitwerk den Luftstrom, der in diesem Fall üblicherweise keine oder nur eine sehr geringe radiale Geschwindigkeitskomponente aufweist, in axialer Richtung nicht abbremst bzw. behindert.

Auch dieses zweite Leitwerk muss die Bedingung erfüllen, dass es im Reversierbetrieb verwendet werden kann, es also auch als Nachleitwerk funktioniert und bei umgekehrter Luftströmung als Vorleitwerk den Luftstrom nicht oder nicht mehr als unvermeidbar in axialer Richtung behindert. Aus diesem Grund ist es besonders vorteilhaft, wenn das erste und das zweite Leitwerk eine identische Leitwerkstruktur aufweisen. Besonders bevorzugt können sie auch als identische Bauteile ausgestaltet sein, was die Herstellungskosten erheblich vermindert.

Die axiale Ausdehnung der Lamellen, d.h. der Abstand zwischen den beiden Längskanten, was auch als Breite bezeichnet werden soll, wird dabei zweckmäßig in Abhängigkeit von einem Durchmesser des Axialventilators vorgegeben. Bei besonders kleinen Durchmessern des Axialventilators genügt beispielsweise schon eine Breite von 10 mm, die Breite sollte also mindestens 10 mm betragen. Bei Belüftungsvorrichtungen, die für die Belüftung von Wohnräumen verwendet werden, liegen die Durchmesser der Axialventilatoren in der Regel zwischen 90 mm und 160 mm, bei solchen Axialventilatoren hat sich eine Breite der Lamellen von 15 mm als besonders vorteilhaft hinsichtlich der Drallverminderung einerseits und des Materialaufwands andererseits herausgestellt, jedoch sind ohne weiteres größere Breiten von beispielsweise 20 mm oder mehr einsetzbar, bei Lüftern mit entsprechend größeren Durchmessern sind auch größere Breiten verwendbar, wobei die Effizienz solcher fluchtend angeordneter Lamellen bei besonders großen Durchmessern und/oder besonders großen Volumenströmen stark sinkt, in diesen Fällen wäre eine aktiv den radialen Drall beeinflussen Struktur mit axial gekrümmten Lamellenflächen effektiver. Aufgrund der relativ geringen Volumenströme - im Vergleich beispielsweise zu einer Stallentlüftung - kann auf solche axialen Krümmungen der Großseiten der Lamellen jedoch verzichtet werden, so dass diese mit ihren Längskanten fluchtend entlang der Rotationsachse des Axialventilators ausgerichtet werden können.

Vorteilhaft liegt die Anzahl der Lamellen im ersten und/oder zweiten Leitwerk zwischen drei und 24, wobei die Randwerte hier mit eingeschlossen sind. Bei einem Leitwerk mit drei Lamellen liegen diese also in einem Winkel von jeweils 120° benachbart um die Symmetrieachse. Bei der Verwendung von weniger Lamellen wird die Wirkung des Leitwerks deutlich verringert. Grundsätzlich erhöht eine höhere Anzahl von Lamellen auch die Effektivität des Leitwerks. Bei einer zu hohen Anzahl von mehr als 24 Lamellen wird der Luftstrom jedoch aufgrund zunehmender Stoßprozesse der Luftmoleküle an den Längskanten der Lamellen, welche dem Ventilator zugewandt sind, gebremst, gleiches gilt auch im Falle der Verwendung als Vorleitwerk. Als besonders günstig hinsichtlich eines effizienten Drallausgleichs, ohne die axiale Geschwindigkeit negativ zu beeinflussen, hat sich die Verwendung einer Anzahl von sechs bis zehn Lamellen, besonders bevorzugt von acht Lamellen erwiesen.

In einer weiteren bevorzugten Ausgestaltung umfassen das erste und/oder das zweite Leitwerk ein Schutzgitter. Mit einem solchen Gitter kann verhindert werden, dass größere Fremdkörper in den Bereich des rotierenden Axialventilators gelangen und diesen beschädigen, insbesondere verringert das Schutzgitter auch die Verletzungsgefahr für Monteure. Eine andere Funktion besteht darin, die Stabilität der Lamellenstruktur zu erhöhen. Das Schutzgitter kann beispielsweise aus mehreren konzentrisch angeordneten Ringen bestehen, welche die Lamellen jeweils in einem Winkel von 90° schneiden. Auch andere, beispielsweise rasterförmige Gitterstrukturen sind selbstverständlich verwendbar. Das Gitter ist somit bevorzugt mit den Lamellen verbunden.

In einer besonders bevorzugten Ausführung schließlich ist der Axialventilator in einer Ventilatoraufnahme angeordnet und sind auch das erste und/oder das zweite Leitwerk jeweils in einer Leitwerkaufnahme angeordnet. Diese Aufnahmen können beispielsweise als Hohlzylinder ausgestaltet sein, wenn die Belüftungsvorrichtung einen runden Querschnitt aufweist. Auch andere Aufnahmen, beispielsweise mit quadratischem oder rechteckförmigem Querschnitt sind denkbar, sofern für eine sichere Halterung der Leitwerke, insbesondere des Axialventilators gesorgt ist. Eine Anpassung des ersten oder des zweiten Leitwerks an einen solchen Querschnitt ist ohne weiteres durch entsprechende Abmessungen der Lamellen möglich. Der Axialventilator wird üblicherweise in einem zylinderförmigen Gehäuse angeordnet sein, welches seinerseits aber in einer viereckigen Ventilatoraufnahme angeordnet sein kann

Sind der Axialventilator in einer Ventilatoraufnahme und die Leitwerke in Leitwerkaufnahmen angeordnet bzw. darin fixiert - wobei für das Leitwerk und die Leitwerkaufnahme auch eine einstückige Ausgestaltung möglich und sogar bevorzugt ist -, so sind bevorzugt an den Ventilator- und Leitwerkaufnahmen Mittel zur Verbindung der Ventilatoraufnahme mit der jeweiligen Leitwerkaufnahme ausgebildet. Besonders bevorzugt sind diese Mittel als - reversible - Steckverbindungen ausgebildet. Dies ermöglicht es, beim Zusammenbau der Belüftungsvorrichtung die Kombination aus Axialventilator, erstem und ggf. zweitem Leitwerk diese bereits als Baugruppe fabrikseitig vorzumontieren, was zum einen den Aufwand für die Montage vor Ort verringert und zum anderen auch sicherstellt, dass sich das jeweilige Leitwerk in einem vorgesehenen Abstand zum Axialventilator möglichst nahe an diesem befindet. Dabei sollten die Lamellen des Leitwerks nicht direkt vor oder hinter dem Axialventilator angeordnet sein, da dies den gewünschten Effekts vermindert. Aufgrund der geringen Einbautiefe dezentraler Anlagen sollte der Abstand der Lamellen zum Ventilator bzw. zum Wärmespeicher zwischen 10 mm und 30 mm betragen. Durch eine entsprechende Längsausdehnung bzw. axiale Ausdehnung der Leitwerkaufnahmen, beispielsweise der Hohlzylinder, lässt sich diese Bedingung ohne weiteres so realisieren, dass es nicht zum Fehleinbau mit zu kurzem Abstand kommt.

Es versteht sich, dass die vorstehend genannten und die nachstehend noch zu erläuternden Merkmale nicht nur in den angegebenen Kombinationen, sondern auch in anderen Kombinationen einsetzbar sind, sofern sie dabei nicht den Rahmen der vorliegenden Erfindung, wie in den Ansprüchen definiert, verlassen.

### Kurze Beschreibung der Zeichnungen

Nachfolgend wird die Erfindung beispielsweise anhand der beigefügten Zeichnungen, die auch erfindungswesentliche Merkmale offenbaren, noch näher erläutert. Es zeigen
Fig. 1 eine in eine Wand eingebaute Belüftung,
Fig. 2 a,b ein Leitwerk zur Verwendung in einer Belüftungsvorrichtung,
Fig. 3 a,b das Leitwerk aus Figur 2, jedoch mit einem Schutzgitter, und
Fig. 4 a,b eine zusammengesteckte Baugruppe aus einem Axialventilator mit einem Leitwerk auf jeder Seite.

### Ausführliche Beschreibung der Zeichnungen

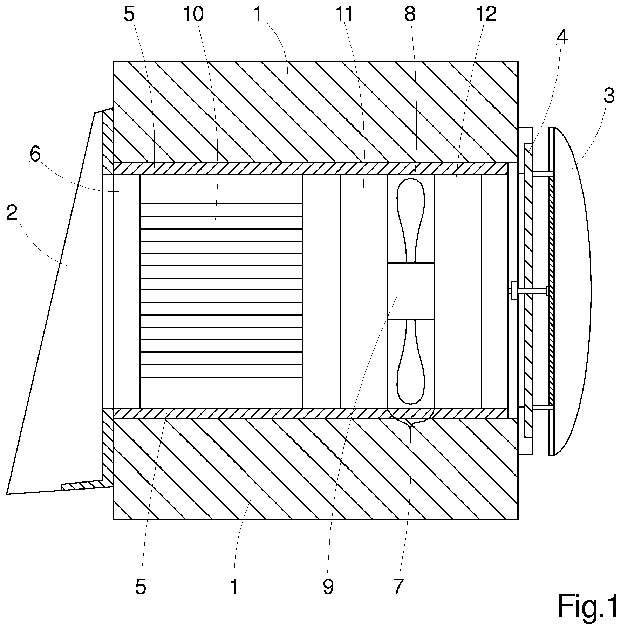

In Fig. 1 ist beispielhaft eine Belüftungsvorrichtung zum Heizen und Kühlen von Zu- und Abluft eines Raumes im Querschnitt skizziert. Die Belüftungsvorrichtung wird in einen Durchbruch durch eine Wand 1 eingesetzt. In Fig. 1 befindet sich links der Wand 1 die Außenseite, rechts die Innenseite des Raumes. Die Außenseite ist in der Regel Teil einer äußeren Umgebung im Freien. Zum Schutz gegen Verschmutzung und das Eindringen von größeren Fremdkörpern oder Vögeln weist die Belüftungsvorrichtung an ihrer Außenseite eine äußere Abdeckkappe 2 auf. Auf der Innenseite des Raumes ist die Belüftungsvorrichtung durch eine innere Abdeckkappe 3 und ein Lüftergitter 4 geschützt. Die innere Abdeckkappe 3 kann in ihrer Neigung verstellbar sein, um beispielsweise die einströmende Luft gezielt in verschiedene Raumrichtungen zu lenken. Die hier im Längsschnitt gezeigte Belüftungsvorrichtung kann im Querschnitt beispielsweise ein rundes oder eckiges Profil haben, im Folgenden wird von einem runden Profil ausgegangen. Die Belüftungsvorrichtung umfasst dementsprechend ein rohrförmiges Gehäuse 5, welche die einzelnen Bestandteile der Belüftungsvorrichtung - abgesehen von den Abdeckelementen - aufnimmt. Das Gehäuse 5 umschließt einen Luftkanal 6, welcher die Innenseite des Raumes mit der Außenseite verbindet. In dem Luftkanal 6 ist ein Axialventilator 7 angeordnet, dargestellt sind hier Schaufeln 8 des Axialventilators 7 und ein Statorgehäuse 9.

Der Axialventilator 7 ist in mindestens zwei Betriebszuständen mit entgegengesetzten Luftförderrichtungen betreibbar. Ein Betriebszustand dient der Förderung von Zuluft von der Außenseite zur Innenseite des Raumes, im anderen Betriebszustand wird Abluft von der Innenseite des Raumes zur Außenseite gefördert, die Belüftungsvorrichtung und insbesondere der Axialventilator 7 kann also im Reversierbetrieb betrieben werden. Der Lüfter bzw. der Axialventilator 7 kann mit einer - nicht gezeigten - Steuerung verbunden sein, welche ihrerseits wiederum mit Temperatur- und/oder Luftfeuchtigkeitssensoren verbunden sein kann, so dass die Belüftungsvorrichtung auch zum Entfeuchten von Räumen verwendet werden kann.

Zwischen dem Axialventilator 7 und der Außenseite des Raumes ist in dem Luftkanal 6 ein Wärmespeicher 10, der auch als Wärmetauscher fungiert, angeordnet. Wird dieser mit Luft durchströmt, nimmt er bei konstantem Strom die Temperatur der Luft an. Wird beispielsweise von außen kühlere Luft eingezogen, kühlt sich der Wärmespeicher 10 ab. Wird anschließend von innen wärmere Luft nach außen geblasen, so kühlt der Wärmespeicher 10 diese Luft ab, erwärmt sich jedoch gleichzeitig. Bei abermaliger Umkehr der Strömungsrichtung wirkt der Wärmespeicher 10 dann wie ein Wärmetauscher, erwärmt die eingesogene Luft und kühlt sich dabei selbst ab. Gut geeignet sind dabei keramische Wärmespeicher 10, die neben einer hohen Wärmekapazität auch resistent gegen Keimbildung sind, sofern sie nicht dauerhaft Feuchtigkeit ausgesetzt sind und in regelmäßigen Intervallen durch Erwärmen getrocknet werden.

Zwischen dem Axialventilator 7 und dem Wärmespeicher 10 ist ein erstes Leitwerk 11 zum Ausgleich des radialen Dralls aus dem Raum strömender Luft angeordnet. Zusätzlich besteht die Option, zwischen dem Axialventilator 7 und der Innenseite ein zweites Leitwerk 12 zur Erhöhung des Druckaufbaus und des Luftvolumenstroms von in den Raum strömender Luft anzuordnen. Diese Option ist bei der in Fig. 1 gezeigten Ausführung realisiert, jedoch für den Effekt einer besseren Ausnutzung des Wärmespeichers 10 nicht unbedingt erforderlich.

Ohne die Verwendung des ersten Leitwerks 11 sinkt die Durchströmung des Wärmespeichers 10 im mittleren Bereich, bedingt durch die radiale Ausdehnung des Statorgehäuses 9 und die radiale Geschwindigkeitskomponente, die die Schaufeln 8 des Axialventilators 7 der ausströmenden Luft aufprägen, in diesem Bereich auf etwa die Hälfte gegenüber den Randbereichen ab. Mit der Verwendung des ersten Leitwerks 11 kann dem entgegengewirkt werden, die Durchströmung des Wärmespeichers 10 ist bei Verwendung des ersten Leitwerks 11 über den gesamten Querschnitt nahezu konstant, insbesondere in dem mittleren Bereich wird sie auf das Durchströmungsniveau, welches in den äußeren Bereichen herrscht, angehoben. Mit Hilfe des optionalen zweiten Leitwerks 12 kann bei der Zuluftförderung der Druckaufbau und der Luftvolumenstrom bei gleicher Drehzahl erhöht werden, so dass die Anfälligkeit für Böen oder Schwankungen der Luftströmung von außen verringert wird.

Erstes und zweites Leitwerk 11, 12 weisen bevorzugt eine identische Leitwerkstruktur auf und sind bevorzugt sogar identische Bauteile. Dies ermöglicht eine kostengünstigere Fertigung und ist insbesondere für den Reversierbetrieb vorteilhaft, da auf diese Weise beim Auftreffen der Luft auf den Axialventilator aus jeder der beiden Richtungen die gleichen Bedingungen herrschen.

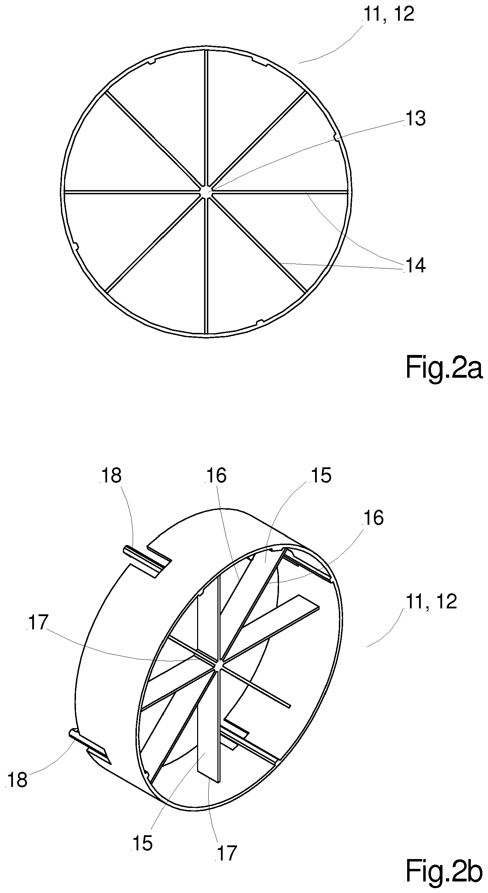

Der Aufbau des ersten Leitwerks 11 bzw. des zweiten Leitwerks 12 wird anhand Fig. 2 näher erläutert. Dabei zeigt Fig. 2a eine Draufsicht auf das Leitwerk und Fig. 2b eine Perspektivansicht des Leitwerks. Im ersten bzw. zweiten Leitwerk 11, 12 ist eine Anzahl radial von einer mit einer Rotationsachse des Axialventilators 7 zusammenfallenden Symmetrieachse 13, welche hier von einem Hohlzylinder mit möglichst geringem Durchmesser umschlossen wird, aber auch als Vollzylinder ausgestaltet sein kann, abstehenden Lamellen 14 angeordnet. Jede der Lamellen 14 weist zwei Großseiten 15 auf, die von Längskanten 16 und Querkanten 17 eingefasst werden. Die Längskanten 16 sind dabei fluchtend entlang der Rotationsachse bzw. Symmetrieachse 13 ausgerichtet. Diese Ausrichtung ist die bestmögliche für einen Reversierbetrieb, da sowohl in den Raum ein- als auch aus dem Raum ausströmender Luft der radiale Drall genommen wird. Die Großseiten 15 sind besonders bevorzugt - wie hier dargestellt - als Planflächen ausgebildet und weisen dann keine Krümmung auf. Es ist aber auch möglich, die Großseiten 15 mit einer positiven oder negativen Wölbung zu versehen. Für einen optimalen Reversierbetrieb erforderlich ist jedoch die fluchtende Ausrichtung der Längskanten entlang der Rotations- bzw. Symmetrieachse 13.

Die Anzahl der Lamellen 14 im ersten und/oder zweiten Leitwerk 12 liegt vorteilhaft zwischen drei und 24. Im vorliegenden Fall liegt sie bei acht, sie kann in Abhängigkeit von der Anzahl von Schaufeln des Axialventilators 7 vorgegeben werden, bei üblichen Axialventilatoren 7 liegt die Anzahl der Lamellen 14 in der Regel in einem Bereich zwischen sechs und zehn Lamellen 14, einschließlich dieser Werte.

Die axiale Ausdehnung der Lamellen 14 wird in Abhängigkeit vom Durchmesser des Axialventilators 7 vorgegeben. Bei einem im Hausbau typischen Durchmesser einer Belüftungsvorrichtung mit rundem Querschnitt von 120 mm liegt die axiale Ausdehnung der Lamellen 14, also der Abstand zwischen den Längskanten 16 einer Lamelle 14, was auch als ihre Breite bezeichnet wird, bei etwa 15 mm. Das erste Leitwerk 11, welches mit dem zweiten Leitwerk 12 baugleich sein kann, ist außerdem mit steckerförmigen Elementen 18 ausgestaltet, welche das Herstellen einer lösbaren Verbindung mit dem Axialventilator 7 ermöglichen. Selbstverständlich ist es grundsätzlich möglich, die Breite der Lamellen zu erhöhen, wodurch die Ausgleichsstrecke verkürzt werden könnte. Aufgrund der vergleichsweise niedrigen Strömungsgeschwindigkeiten ist dies jedoch nicht notwendig.

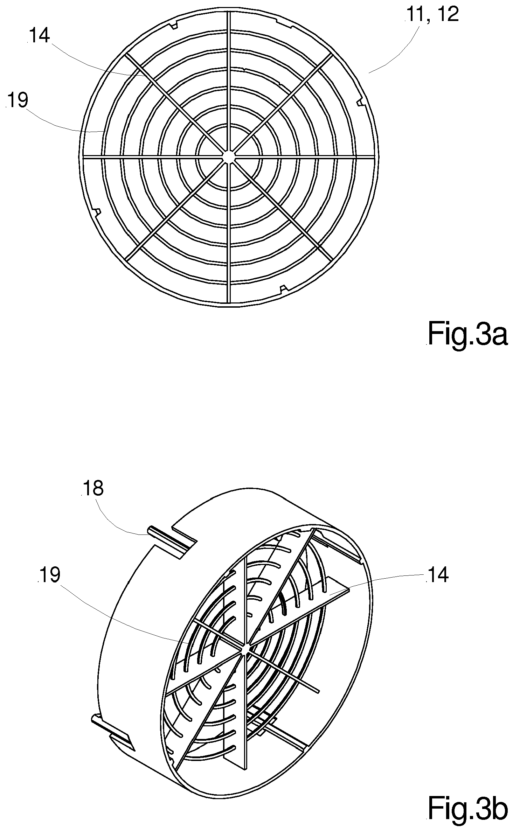

In Fig. 3 ist eine Abwandlung des in Fig. 2 gezeigten Leitwerks 11 gezeigt, welche zusätzlich ein Schutzgitter 19 insbesondere zum Schutz für die Finger umfasst. Das Schutzgitter 19 ist mit den Lamellen 14 verbunden. Fig. 3a zeigt eine Draufsicht und Fig. 3b in Analogie zu Fig. 2b eine Perspektivansicht des ersten bzw. zweiten Laufwerks 11, 12.

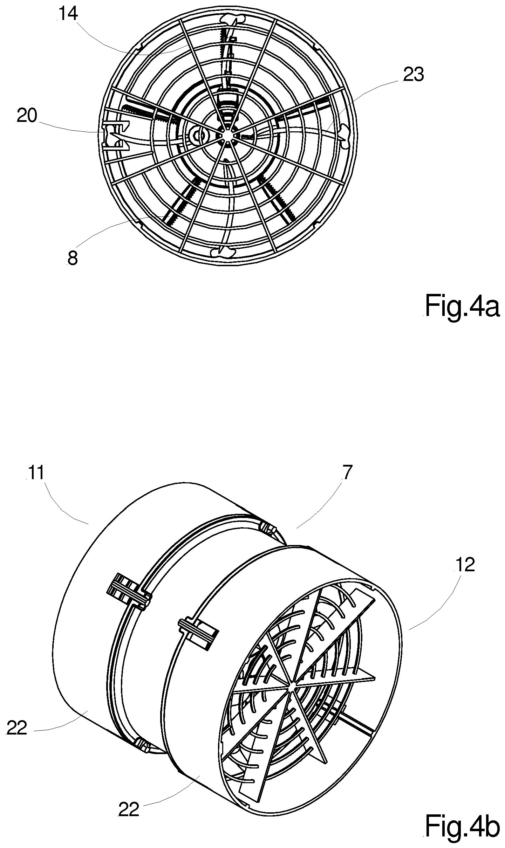

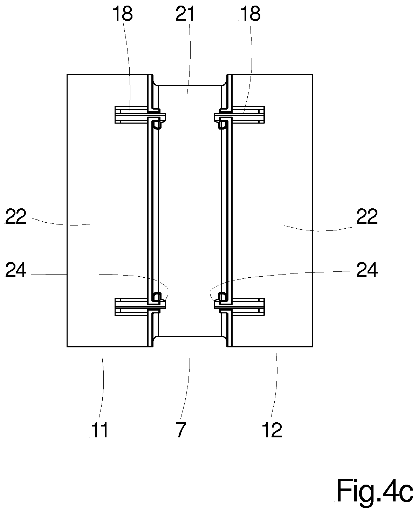

In Fig. 4 schließlich ist ein Axialventilator 7 gezeigt, welcher auf der einen Seite mit einem ersten Leitwerk 11 und auf der anderen Seite mit einem zweiten Leitwerk 12 verbunden ist. Fig. 4a zeigt wieder eine Draufsicht auf diesen Verbund, der eine Baugruppe bildet, und Fig. 4b eine Perspektivansicht. Am linken Rand zu erkennen ist außerdem eine Steckerhalterung 20, die einen Stecker für den elektrischen Anschluss des Axialventilators 7 aufnehmen und halten kann. Um eine stabile Verbindung zwischen Axialventilator 7 und erstem bzw. zweitem Leitwerk 11, 12 herzustellen, ist der Axialventilator 7 in einer Ventilatoraufnahme 21 angeordnet und sind das erste und das zweite Leitwerk 11, 12 jeweils in einer Leitwerkaufnahme 22 angeordnet. Die Ventilatoraufnahme 21 und die Leitwerkaufnahmen 22 haben auch die Funktion eines Gehäuses und stabilisieren die Leitwerkstrukturen bzw. den Ventilator. Der Axialventilator 7 ist über gekrümmte Streben 23 mit der Ventilatoraufnahme 21 fest verbunden. An der Ventilatoraufnahme 21 und den Leitwerkaufnahmen 22 sind Mittel zur Verbindung der Ventilatoraufnahme 21 mit jeweils einer Leitwerkaufnahme ausgebildet, dies umfasst die bereits genannten steckerförmigen Elemente 18 an den Leitwerkaufnahmen 22, die in entsprechende buchsenförmige Elemente 24 an der Ventilatoraufnahme 21 eingreifen und dort eine Steckverbindung, die auch als Klemmverbindung ausgestaltet sein kann, zur Fixierung der Baugruppenelemente relativ zueinander, bilden. Gleichermaßen können buchsenförmige Elemente auch an den Leitwerkaufnahmen 22 und steckerförmige Elemente an dem Axialventiltator 7 ausgebildet sein.

Mittels des ersten Leitwerks 11 und/oder des zweiten Leitwerks 12 ist es möglich, den Wärmespeicher 10 bei Belüftungsvorrichtungen für Wohnräume etc. effektiver auszunutzen und dadurch Energie zu sparen, zudem wird bei gleicher Drehzahl der Volumendruck erhöht, so dass die Luftzufuhr bzw. -abfuhr verbessert wird. Die Leitwerke lassen sich bei bestehenden Belüftungsvorrichtungen nachrüsten, insbesondere lassen sie sich als Baugruppe mit einem Axialventilator 7 bereits fabrikseitig zusammensetzen, was die Montage erleichtert.

### Bezugszeichenliste

- 1: Wand
- 2: äußere Abdeckkappe
- 3: innere Abdeckkappe
- 4: Lüftergitter
- 5: Gehäuse
- 6: Luftkanal
- 7: Axialventilator
- 8: Schaufel
- 9: Statorgehäuse
- 10: Wärmespeicher
- 11: erstes Leitwerk
- 12: zweites Leitwerk
- 13: Symmetrieachse
- 14: Lamelle
- 15: Großseite
- 16: Längskante
- 17: Querkante
- 18: steckerförmiges Element
- 19: Schutzgitter
- 20: Steckerhalterung
- 21: Ventilatoraufnahme
- 22: Leitwerkaufnahme
- 23: Strebe
- 24: buchsenförmiges Element

## Patentansprüche

1. Belüftungsvorrichtung zum Be- und Entlüften eines Raumes, umfassend
- einen Luftkanal (6) zur Verbindung einer Innenseite des Raumes mit einer Außenseite,
- einen in dem Luftkanal (6) angeordneten Axialventilator (7), der in mindestens zwei Betriebszuständen mit entgegengesetzten Luftförderrichtungen zur Förderung von Zuluft von der Außenseite zur Innenseite des Raumes und zur Förderung von Abluft von der Innenseite des Raumes zur Außenseite betreibbar ist,
- einen in dem Luftkanal (6) zwischen dem Axialventilator (7) und der Außenseite angeordneten Wärmespeicher (10), **dadurch gekennzeichnet, dass**
- zwischen dem Axialventilator (7) und dem Wärmespeicher (10) ein erstes Leitwerk (11) zum Ausgleich des radialen Dralls aus dem Raum strömender Luft angeordnet ist,
- wobei im ersten Leitwerk (11) eine Anzahl radial von einer mit einer Rotationsache des Axialventilators (7) zusammenfallenden Symmetrieachse (13) abstehenden Lamellen (14) angeordnet ist, und
- wobei die Lamellen (14) zwei Großseiten (15), die von Längs- und Querkanten (16, 17) eingefasst werden, aufweisen, und die Längskanten (16) fluchtend entlang der Rotationsachse ausgerichtet sind.

2. Belüftungsvorrichtung nach Anspruch 1, **dadurch gekennzeichnet, dass** die Großseiten (15) als Planflächen ausgebildet sind.

3. Belüftungsvorrichtung nach Anspruch 1 oder 2, **dadurch gekennzeichnet, dass** zwischen dem Axialventilator (7) und der Innenseite ein zweites Leitwerk (12) zur Erhöhung des Druckaufbaus und Luftvolumenstroms von in den Raum strömender Luft angeordnet ist.

4. Belüftungsvorrichtung nach einem der Ansprüche 1 bis 3, **dadurch gekennzeichnet, dass** erstes und zweites Leitwerk (11, 12) eine identische Leitwerkstruktur aufweisen, bevorzugt identische Bauteile sind.

5. Belüftungsvorrichtung nach einem der Ansprüche 1 bis 4, **dadurch gekennzeichnet, dass** eine axiale Ausdehnung der Lamellen (14) in Abhängigkeit von einem Durchmesser des Axialventilators vorgegeben ist.

6. Belüftungsvorrichtung nach einem der Ansprüche 1 bis 5, **dadurch gekennzeichnet, dass** die Anzahl der Lamellen (14) im ersten und/oder zweiten Leitwerk (16, 17) zwischen drei und 24, bevorzugt zwischen sechs und zehn liegt, besonders bevorzugt acht beträgt.

7. Belüftungsvorrichtung nach einem der Ansprüche 1 bis 6, **dadurch gekennzeichnet, dass** das erste und/oder das zweite Leitwerk (16, 17) ein Schutzgitter (19) umfassen.

8. Belüftungsvorrichtung nach Anspruch 7, **dadurch gekennzeichnet, dass** das Schutzgitter (19) mit den Lamellen (14) verbunden ist.

9. Belüftungsvorrichtung nach einem der Ansprüche 1 bis 8, **dadurch gekennzeichnet, dass** der Axialventilator (7) in einer Ventilatoraufnahme (21) angeordnet ist, dass das erste und das zweite Leitwerk (16, 17) jeweils in einer Laufwerkaufnahme (22) angeordnet sind, und dass an den Ventilator- und Leitwerkaufnahmen (21, 22) Mittel zur Verbindung der Ventilatoraufnahme (21) mit der jeweiligen Leitwerkaufnahme (22), bevorzugt als Steckverbindung, ausgebildet sind.

## Claims

1. Ventilation device for airing and ventilating a room, comprising
- an air duct (6) for connecting an inside of the room to an outside,
- an axial fan (7) arranged in the air duct (6), which axial fan can be operated in at least two operating states with opposite air conveying directions for conveying inlet air from the outside to the inside of the room and for conveying extracted air from the inside of the room to the outside,
- a heat store (10) arranged in the air duct (6) between the axial fan (7) and the outside, **characterized in that**
- a first directional grille (11) is arranged between the axial fan (7) and the heat store (10) to even out the radial swirl of air flowing out of the room,
- wherein a number of fins (14) projecting radially from an axis of symmetry (13) coincident with an axis of rotation of the axial fan (7) is arranged in the first directional grille (11), and
- wherein the fins (14) have two major sides (15) which are bordered by longitudinal and transverse edges (16, 17), and the longitudinal edges (16) are aligned flush along the axis of rotation.

2. Ventilation device according to claim 1, **characterized in that** the major sides (15) are formed as plane surfaces.

3. Ventilation device according to claim 1 or 2, **characterized in that** between the axial fan (7) and the inside, a second directional grille (12) is arranged to increase the pressure build-up and air volume flow of the air flowing into the room.

4. Ventilation device according to one of claims 1 to 3, **characterized in that** first and second directional grille (11, 12) have an identical directional grille structure, preferably are identical components.

5. Ventilation device according to one of claims 1 to 4, **characterized in that** an axial extension of the fins (14) is specified depending on a diameter of the axial fan.

6. Ventilation device according to one of claims 1 to 5, **characterized in that** the number of the fins (14) in the first and/or second directional grille (11, 12) lies between three and 24, preferably between six and ten, particularly preferably is eight.

7. Ventilation device according to one of claims 1 to 6, **characterized in that** the first and/or the second directional grille (11, 12) comprise a protective grid (19).

8. Ventilation device according to claim 7, **characterized in that** the protective grid (19) is connected to the fins (14).

9. Ventilation device according to one of claims 1 to 8, **characterized in that** the axial fan (7) is arranged in a ventilator receiver (21), the first and the second directional grilles (11, 12) are in each case arranged in a directional grille receiver (22), and on the ventilator receiver and directional grille receiver (21, 22) means are formed, preferably as a plug-in connection, for connecting the ventilator receiver (21) to the respective directional grille receiver (22).

## Revendications

1. Dispositif de ventilation pour aérer et ventiler une pièce, comprenant
- une conduite d'air (6) destinée à relier un intérieur de la pièce à un extérieur,
- un ventilateur axial (7) agencé dans la conduite d'air (6), lequel ventilateur axial peut être actionné dans au moins deux états opérationnels avec des sens d'acheminement d'air opposés afin d'acheminer un air d'entrée depuis l'extérieur vers l'intérieur de la pièce et afin d'acheminer un air évacué depuis l'intérieur de la pièce vers l'extérieur,
- un accumulateur de chaleur (10) agencé dans la conduite d'air (6) entre le ventilateur axial (7) et l'extérieur,
**caractérisé en ce que**
- une première grille à air directionnelle (11) est agencée entre le ventilateur axial (7) et l'accumulateur de chaleur (10) pour égaliser le tourbillon radial de l'air sortant de la pièce,
- dans lequel un nombre d'ailettes (14) saillant radialement depuis un axe de symétrie (13) coïncidant avec un axe de rotation du ventilateur axial (7) est agencé dans la première grille à air directionnelle (11), et
- dans lequel les ailettes (14) ont deux côtés principaux (15) qui sont bordés par des bords longitudinaux et transversaux (16, 17), et les bords longitudinaux (16) sont alignés à niveau le long de l'axe de rotation.

2. Dispositif de ventilation selon la revendication 1, **caractérisé en ce que** les côtés principaux (15) sont formés en tant que surfaces planes.

3. Dispositif de ventilation selon la revendication 1 ou 2, **caractérisé en ce que**, entre le ventilateur axial (7) et l'intérieur, une seconde grille à air directionnelle (12) est agencée pour augmenter l'établissement de la pression et le débit d'air de l'air entrant dans la pièce.

4. Dispositif de ventilation selon l'une des revendications 1 à 3, **caractérisé en ce que** les première et seconde grilles à air directionnelles (11, 12) ont une structure identique de grille à air directionnelle, et sont de préférence des composants identiques.

5. Dispositif de ventilation selon l'une des revendications 1 à 4, **caractérisé en ce qu'**une extension axiale des ailettes (14) est spécifiée en fonction d'un diamètre du ventilateur axial.

6. Dispositif de ventilation selon l'une des revendications 1 à 5, **caractérisé en ce que** le nombre d'ailettes (14) dans la première et/ou la seconde grille à air directionnelle (11, 12) est compris entre trois et 24, de préférence entre six et dix, idéalement est de huit.

7. Dispositif de ventilation selon l'une des revendications 1 à 6, **caractérisé en ce que** les première et/ou seconde grilles à air directionnelles (11, 12) comprennent un grillage de protection (19).

8. Dispositif de ventilation selon la revendication 7, **caractérisé en ce que** le grillage de protection (19) est connecté aux ailettes (14).

9. Dispositif de ventilation selon l'une des revendications 1 à 8, **caractérisé en ce que** le ventilateur axial (7) est agencé dans un réceptacle à ventilateur (21), les première et seconde grilles à air directionnelles (11, 12) sont dans chaque cas agencées dans un réceptacle à grille à air directionnelle (22), et sur le réceptacle à ventilateur et le réceptacle à grille à air directionnelle (21, 22) des moyens sont formés, de préférence sous forme de connexion enfichable, pour connecter le réceptacle à ventilateur (21) au réceptacle à grille à air directionnelle respectif (22).
